# EUROPÄISCHE PATENTSCHRIFT

(11) **EP 3 676 464 B1**
(45) Veröffentlichungstag und Bekanntmachung des Hinweises auf die Patenterteilung: **17.11.2021**
(21) Anmeldenummer: 18759320.7
(22) Anmeldetag: 28.08.2018
(51) Int. Cl.: E04D 3/36, F16B 25/00, F16B 25/10

(54) **BEFESTIGER, BEFESTIGUNGSANORDNUNG UND VERFAHREN ZUR MONTAGE**
FASTENER FOR INSULATION MATERIAL
DISPOSITIF DE FIXATION POUR MATÉRIAU D'ISOLATION

(30) Priorität: 01.09.2017 EP 17188934
(43) Veröffentlichungstag der Anmeldung: 08.07.2020
(73) Patentinhaber: SFS Intec Holding AG, 9435 Heerbrugg (CH)
(72) Erfinder: GASSER, Daniel, 9444 Diepoldsau (CH); HEINZMANN, Thomas, 9008 St. Gallen (CH)
(86) Internationale Anmeldenummer: PCT/EP2018/073080
(87) Internationale Veröffentlichungsnummer: WO 2019/042963

(56) Entgegenhaltungen:
- EP-A1- 2 366 843
- EP-A1- 2 930 378
- EP-B1- 1 235 988
- WO-A1-89/02504
- DE-A1-102009 051 081
- DE-U1- 8 908 118
- JP-A- H08 232 930

## Beschreibung

Die vorliegende Erfindung befasst sich mit einer Befestigungsanordnung, insbesondere zur Sicherung von Isolationsschichten auf Dächern, einem dafür besonders geeigneten Befestiger und einem Montageverfahren hierzu.

### HINTERGRUND

Um aktuellen Vorschriften zur Isolation von Flachdachkonstruktionen zu genügen, müssen je nach Klima auf einer tragenden Unterkonstruktion verschiedene Lagen von Isolationsmaterial rationell verarbeitet werden. Üblicherweise besteht die Abdecklage über den Isolationsschichten aus einer Dachbahn bzw. Kunststofffolie, die Unterkonstruktion häufig aus Trapezblechen. Zur Befestigung ist es bekannt, eine Kombination von Schraube und Tülle zu verwenden. Unter einer Tülle wird hierbei üblicherweise eine rohrförmige Hülse verstanden mit einer Verengung an einem Ende und einer radial abstehenden Kopfverbreiterung am anderen. Diese Kopfverbreiterung hat die Form einer überdimensionierten Unterlagscheibe, die im montierten Zustand auf der Dachbahn aufliegt und die Zuglasten des Befestigers flächig verteilt. Der Innendurchmesser des Schaftes der Tülle ist so bemessen, dass der Befestiger mitsamt Kopf in die Tülle eingeführt werden kann - die Tülle wirkt also auch als Verlängerung des Befestigers. Bei der Montage wird der Befestiger in der Tülle durch die Isolationsschichten in die Unterkonstruktion eingebohrt. Der Kopf des Befestigers schlägt beim Eindrehvorgang an der Spitzenverengung der Tülle an und sorgt je nach Setztiefe des Befestigers für eine Zuglast an der Tülle. Bei Unterkonstruktionen wie Holz oder Beton lassen sich u.U. durch Rückdrehen des Befestigers die Zuglasten kontrollieren, eine echte Regulierung unabhängig von der Verankerung erlaubt dies jedoch nicht.

Bei Blechunterkonstruktionen besteht darüber hinaus das Problem, dass der Eingriff des Befestigers im Untergrund (der Unterkonstruktion) sehr schmal ist und durch das Gewinde stark beansprucht wird. Eine Justage durch Vor- und Zurückdrehen des Befestigers kann die Auszugskräfte des Befestigers negativ beeinflussen.

### STAND DER TECHNIK

Um bei der Befestigung von Isolationsschichten auf Stahlblechkonstruktionen die Justierbarkeit zu verbessern, schlägt die EP 2 366 843 daher vor, die Kombination von Tülle und Befestiger um eine Sechskantmutter auf dem Gewinde des Befestigers zu ergänzen. Die Aussenform der Sechskantmutter korrespondiert hierbei mit der Geometrie des Innenraums des Tüllenschafts. Die Mutter ist entlang der Tüllenachse daher längsverschieblich, die Rotation von Mutter und Tülle ist jedoch gebunden. Dadurch kann der Befestiger auf der vorgesehenen Setztiefe verankert werden und anschliessend, durch Verdrehen der Tülle, die Verankerungstiefe der Tülle reguliert werden. Nachteilig ist dabei, dass die Kopfverbreiterung der Tülle speziell in der Endmontagephase eine unerwünschte (Dreh)Mitnahmebewegung auf die Folie ausübt.

Das Dokument DE 10 2009 051 081 A1 zeigt eine spezielle Schlüsselschraube mit einem kopfnahen Gewindeabschnitt, der als Maschinengewinde ausgeführt ist und einem spitzennahen Holzgewindeabschnitt. Das Maschinengewinde hat einen geringfügig grösseren Aussendurchmesser, so dass eine passende Mutter über den Holzgewindeabschnitt auf das Maschinengewinde aufgeschraubt werden kann.

Die vorliegende Erfindung hat sich zum Ziel gesetzt, den Stand der Technik dahingehend zu verbessern, dass die Einstellbarkeit der Setztiefe der Tülle verbessert wird. Dies wird durch einen Befestiger gemäss Anspruch 1 erzielt, der in einer Befestigungsanordnung nach Anspruch 12 eingesetzt wird. Ein Verfahren zur Montage einer solchen Befestigungsvorrichtung ist in Anspruch 18 beschrieben.

### BESCHREIBUNG DER ERFINDUNG

Die Erfindung verwendet einen speziell ausgeführten Befestiger in einer Kombination mit einer Tülle und einer Mutter.

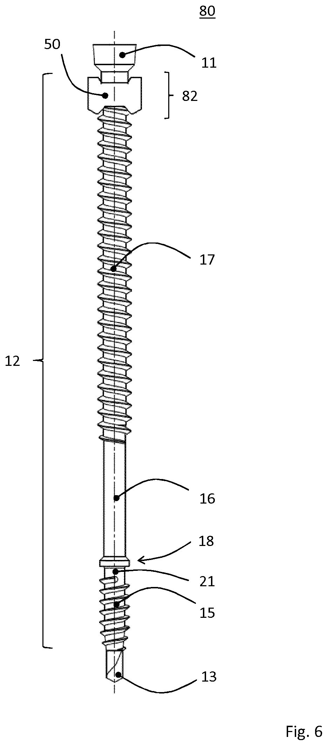

Dabei umfasst der Befestiger 10, 20 bzw. 80 in seinem Grundaufbau einen Kopf 11, einen anschliessenden Schaft 12 und eine daran anschliessenden Spitze 13, wobei der Schaft 12 einen Gewindeabschnitt 15 nahe der Spitze 13 und einen Gewindeabschnitt 17 nahe dem Kopf 11 aufweist. In der Ausführungsform des Befestigers 80 nach Figur 6 ist dort eine Mutter 50 angebracht. Ferner ist ein Anschlag 18 zwischen den Gewindeabschnitten (15 bzw. 17) angeordnet. Dieser Anschlag 18 dient, wie weiter unten erläutert wird, als Tiefenbegrenzer beim Eintreiben des Befestigers 10, 20, 80. Kennzeichnend ist, dass der spitzennahe Gewindeabschnitt 15 als Rechtsgewinde und der zweite Gewindeabschnitt 17 als Linksgewinde ausgeführt ist bzw. technisch äquivalent der Gewindeabschnitt 15 als Linksgewinde und der zweite Gewindeabschnitt 17 als Rechtsgewinde.

Bevorzugt ist die Mutter 50 aus Kunststoff geformt, alternativ als Blechformteil oder Tiefziehteil. Das Blechformteil bzw. Tiefziehteil kann als hülsenförmiger Körper hergestellt werden, wobei eine Kante des verwendeten Bleches einer Gewindekante nachgebildet wird. Sowohl die Ausführung in Kunststoff wie Blech erlaubt eine maschinelle, kostengünstige Herstellung dieses Bauteils und erleichtert die Montage.

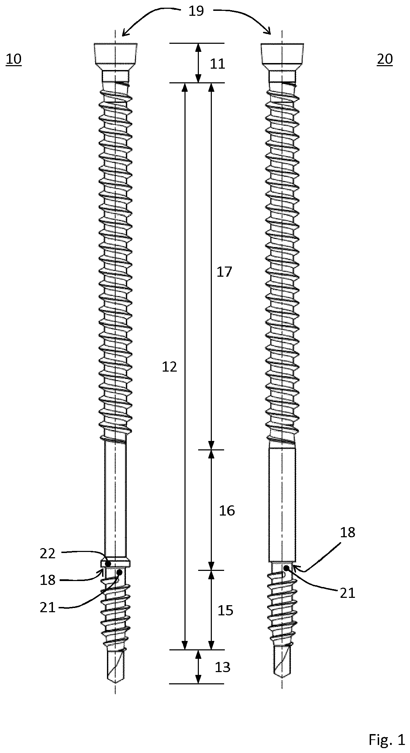

Der vorerwähnte Anschlag 18 kann als Teil eines ringförmigen Wulstes 22 realisiert werden, dessen zur Spitze 13 gewandte Seite diese Funktion erfüllt. Ebenso möglich ist es, den Anschlag 18 als Teil eines gewindefreien Abschnittes 16 auszuführen, wobei dessen Aussendurchmesser (Kerndurchmesser) verbreitert ausgeführt ist. Alternativ kann auch der zur Spitze 13 weisende Auslauf des zweiten Gewindeabschnitts 17 die Funktion des Anschlags übernehmen. Mit anderen Worten, sowohl der Wulst 22 wie auch ein gewindefreier Abschnitt 16 stellen an ihrer der Spitze 13 zugewandten Seite eine Stufe, eine radial vorkragende Anschlagfläche zur Verfügung. Dieser Anschlag dient nur als Tiefenbegrenzung für den Setzvorgang in der Unterkonstruktion. Nachdem der kopfnahe Gewindeabschnitt 17 gegensinnig zum ersten Gewindeabschnitt 15 angelegt ist, greift das Gewinde im Abschnitt 17 nicht in das von der Spitze 13 dimensionierte Loch und stellt somit funktionell ebenfalls eine Tiefenbegrenzung dar. In Figur 1 sind zwei Varianten mit eigenen Bezugszeichen 10, 20 versehen, in Figur 6 eine bevorzugte Variante mit Bezugszeichen 80.

In einer weiteren Ausbildungsform wird zwischen dem ersten Gewindeabschnitt 15 und dem Anschlag 18 ein gewindefreier Schaftbereich 21 angeordnet. Beim Eindrehen des Befestigers in einen Stahlblechuntergrund wird das Stahlblech durch den erste Gewindeabschnitt bis zum Anschlag 18 gezogen und bleibt im gewindefreien Abschnitt 21 zwischen dem Anschlag und dem Gewindeauslauf definiert gehalten. Ein weiteres Eindringen des Befestigers in den Untergrund wird so verhindert, der Befestiger kann sich dabei frei drehen. Für den Einsatzbereich in Stahlblech ist es dabei vorteilhaft, die Spitze 13 des Befestigers 10, 20, 80 als Bohrspitze auszuführen, die sich ohne Vorbohren selbst in das Material einsenken kann.

In einer weiteren Ausführungsvariante kann die Steigung des Gewindes im spitzennahen Gewindeabschnitt 15 von der Steigung im kopfnahen Gewindeabschnitt 17 unterschiedlich gewählt werden. Je nach Auslegung kann die Steigung grösser oder kleiner gewählt werden.

In einer weiter bevorzugten Ausführungsvariante wird der (kopfnahe) Gewindeabschnitt 17 des Befestigers 80 mindestens in einem Bereich 82, wo die Mutter 50 angeordnet ist, geschwächt ausgeführt. Geschwächt bedeutet in diesem Zusammenhang, dass das Gewinde eine geringere Gewindehöhe aufweist als im restlichen Schaftbereich mit Gewinde. Im Querschnitt betrachtet wird sich das Gewinde beispielsweise von einem im Wesentlichen dreieckigen zu einem trapezoidalen Querschnitt verändern. Alternativ kann der Gewindegang als Ganzes verkleinert ausgeführt werden unter Beibehaltung des dreieckigen Querschnitts.

In einer bevorzugten Varianten ist die Mutter 50 bzw. der Bereich 82 auf dem sie angeordnet ist, am kopfnahen Gewindeauslauf des Gewindeabschnitts 17 angebracht. Mit "am Gewindeauslauf" sei dabei gemeint: Unmittelbar benachbart bzw. den Gewindeauslauf überlappend bzw. ganz oder teilweise überdeckend. Insbesondere kann der Bereich 82 ein Unterkopfabschnitt sein. In einer besonders bevorzugten Variante ist der Bereich 82 als gewindefreier (Unterkopf-) Abschnitt ausgeführt, was einem maximal geschwächten Gewinde entspräche (Gewindehöhe Null).

Wie vorerwähnt, kommt der Befestiger 80 in einer Befestigungsanordnung zum Einsatz. Diese umfasst neben dem Befestiger 80 zusätzlich eine Tülle 30, die als im wesentlichen zylindrische Hülse mit einem Kopfteil 31, einem hohlzylindrischem Schaft 32 und einer konischen Spitze 33 dargestellt werden kann. Die Tülle folgt in ihrer Grundform dem Stand der Technik, wobei die konische Spitze 33 der Tülle 30 über eine Durchtrittsöffnung 35 verfügt, deren Durchmesser geringer ist als der Innendurchmesser des zylindrischen Innenraums 36 des Schaftes 32. Die in den Figuren als Dₘₐₓ und Dₘᵢₙ bezeichneten Durchmesser sind also so gewählt, dass gilt Dₘₐₓ>Dₘᵢₙ. Der zylindrische Innenraum 36 der Tülle 30 und die Durchgangsöffnung 35 verfügen dabei über eine gemeinsame Zentralachse 41. Dₘᵢₙ ist so gewählt, dass Spitze 13 und Schaft 12 eines Befestigers 10, 20, 80 passieren können, nicht jedoch die Mutter 50.

Dies deswegen, weil der Übergangsbereich zwischen der zylindrischen Durchgangsöffnung 35 und dem zylindrischen Innenraum 35 bei der Tülle eine im wesentlichen radialsymmetrische, ebene oder leicht konische Anschlagfläche 38 bildet.

Bei der Tülle selbst wiederum kann das Kopfteil 31 unterschiedlich ausgeführt sein. Es weist entweder eine flanschähnliche Form 37 auf, die dazu ausgelegt ist, für eine aufsteckbare Lastverteilscheibe eine Haltefläche zu bilden. Diese Lastverteilscheibe kann aufgabenspezifisch in verschiedenen Materialien (Aluminium, Stahlblech, Kunststoff) ausgeführt sein mit unterschiedlichen Formen (kreisrund, oval, vieleckig) und Durchmessern. Alternativ kann der Kopf eine angeformte radiale Kopfverbreiterung 39 aufweisen. Beide Ausführungen haben ihre spezifischen Vorteile, die sich aus dem Einsatzprofil ergeben.

Bezüglich der Mutter 50 gilt, dass sie bevorzugt eine zylindrische Form um eine zentrale Rotationsachse 51 hat und an einem Längsende einen Kraftangriff 52 aufweist. Durch das Einführen des Befestigers mit der Mutter in die Tülle 30 ist ein Kraftangriff radial aussen nicht sinnvoll. Daher wird er bevorzugt an die an das zylindrische Vorderende verlegt und weist somit im vormontierten Zustand von der Tüllenspitze 33 weg.

In einer ersten bevorzugten Variante wird die Mutter 50 aus Kunststoff geformt und bei der Herstellung direkt auf den Abschnitt 82 des zweiten Gewindeabschnittes 17 aufgespritzt. Dazu wird der Befestiger in eine entsprechende Form einer Spritzgiessmaschine eingelegt und von der Form umschlossen. Vorteil ist, dass das erforderliche Gewinde der Mutter beim Spritzgiessvorgang entsteht und die Mutter zugleich korrekt ausgerichtet vormontiert ist. Alternativ kann die Mutter 50 als Blechformteil oder Tiefziehteil ausgeführt werden, das auf einen Abschnitt zweiten Gewindeabschnittes 17 aufgeschoben oder aufgeschraubt wird. Auch eine separat hergestellte Mutter 50 aus Kunststoff kann natürlich aufgeschoben bzw. aufgeschraubt werden.

Wegen der beiden gegenläufigen Gewinde 15 bzw. 17 ist ein Aufschieben bzw. Aufschrauben natürlich sinnvoll nur dann möglich, wenn das Gewinde der Mutter 50 passend zum Drehsinn des Gewindeabschnitts 17 ausgelegt ist. Daher werden am vorteilhaftesten die Aussendurchmesser des spitzennahe Gewindeabschnitts 15 wie auch des Anschlags 18 geringer gewählt als der freie Gewindeinnendurchmesser der Mutter 50. Mit freier Gewindeinnendurchmesser der Mutter ist dabei der freie Durchlass gemeint, diametral von Gewindespitze zu Gewindespitze des Innengewindes gemessen. Auf diese Weise kann eine Mutter 50 den spitzennahen Gewindeabschnitt 15 passieren, ebenso den Anschlag 18 um anschliessend auf den kopfnahen Gewindeabschnitt 17 aufgeschraubt zu werden.

Das Montageverfahren für den oben beschriebenen Befestiger bzw. die angesprochene Befestigungsvorrichtung kann mit folgenden Schritten beschrieben werden:
- Bereitstellen einer Befestigungsanordnung wie oben beschrieben, wobei der Befestiger 80 mit der Mutter 50 in den Innenraum 36 der Tülle 30 eingeführt ist. Diese Vormontage kann ab Werk erfolgen oder auf der Baustelle vorgenommen werden. Sinnvoll ist, die Kombination von Befestiger 80 mit Mutter 50 vormontiert zu haben und vor Ort, je nach Dicke der zu verarbeitenden Isolationsschichten mit einer Tülle passender Länge durch Einstecken zu kombinieren.
- Eindrücken bzw. Eindrehen der Befestigungsanordnung in eine Gebäudehülle aus zumindest Abdeckfolie, Isolationsschicht und Tragblech (in Arbeitsrichtung betrachtet). Je nach Dicke und Zähigkeit kann dieses Eindrücken von Hand erfolgen. Die Spitze des Befestigers (Bohrspitze) reicht in der Regel aus, um die Kombination aus Befestiger und Tülle in Position zu bringen. Alternativ kann die Kombination auch auf ein Setzwerkzeug (Bohrmaschine mit Werkzeug) aufgesteckt werden und damit die Abdeckfolie und die Isolationsschicht mit motorischer Unterstützung durchdrungen werden.
- Im nächsten Schritt geht es um das Durchbohren des Tragbleches mit Hilfe der Bohrspitze, bis das Tragblech am Anschlag 18 anschlägt und der Befestiger 80 überdreht. Nach dem Bohrvorgang zieht der erste Gewindeabschnitt 15 den Befestiger in das Tragblech bis es in den gewindefreien Schaftbereich 18 gelangt und dort zwischen dem letzten Gewindegang und dem Anschlag 18 gehalten wird.
- Sichern der Mutter 50 mittels eines Werkzeuges gegen die (Mit-)Drehbewegung des Befestigers, wodurch die Mutter 50 sich auf dem zweiten Gewindeabschnitt 17 des Befestigers 80 in Richtung Spitze 13 bewegt.
- Nach dem Anschlagen der Mutter 50 an der Anschlagfläche 38 der Tülle 30 nimmt die Mutter 50 während der weiteren Drehbewegung des Befestigers 80 die Tülle mit und bewegt sie in Richtung Unterkonstruktion. Dabei dreht sich - im Gegensatz zum Stand der Technik - die Tülle selbst nicht zwangsläufig mit und vermeidet dadurch eine Belastung der Abdeckfolie.
- Bei Erreichen der geforderten Setztiefe der Tülle 30 wird die Drehbewegung beendet.

Der Vorteil des Verfahrens besteht somit darin, dass während des gesamten Setzvorgangs der Befestigungsanordnung die Drehrichtung des Befestigers 80 beibehalten werden kann. Die unterschiedliche Gewinderichtung zwischen erstem und zweiten Gewindeabschnitt 15, 17 erlaubt diese Vorgehensweise.

Wenn der erste Gewindeabschnitt 15 als Rechtsgewinde und der zweite Gewindeabschnitt 17 als Linksgewinde ausgeführt ist, ist die Drehrichtung beim Einbohren klassisch im Uhrzeigersinn. Wird der erste Gewindeabschnitt 15 als Linksgewinde und der zweite Gewindeabschnitt 17 als Rechtsgewinde ausgeführt, ist die Drehrichtung bei der Montage gegensinnig, also im Gegenuhrzeigersinn. Das Montageprinzip wie oben geschildert bleibt jedoch erhalten - die Drehrichtung des Setzgeräts wird in beiden Fällen beibehalten.

Um diese Einsatzweise zu erlauben, wird das zugehörige Werkzeug im Wesentlichen zweiteilig ausgeführt. Es umfasst einen zentralen Teil mit einer zylindrischen Stange, an deren einem Ende ein Werkzeugkopf angebracht ist, der mit einem Kraftangriff 19 im Kopf 11 des Befestigers 10 bzw. 20 oder 80 zusammenwirken kann. Ferner umfasst das Werkzeug eine rohrförmige Hülse, die koaxial um die zylindrische Stange angeordnet werden kann und die an ihrem einem Ende so geformt ist, dass sie in den Kraftangriff 52 der Mutter 50 passt. Der Aussendurchmesser der rohrförmigen Hülse wird etwas kleiner als Dₘₐₓ des Innenraums 36 der Tülle 30 gewählt. Der freie Innendurchmesser der rohrförmigen Hülse ist ausreichend, um einen Befestiger mit verbundenem Antriebswerkzeug zum umschliessen.

Während der Setzung des Befestigers ist nur die zentrale Stange via Werkzeugkopf mit dem Kraftangriff im Kopf des Befestigers im Eingriff. Nach dem Setzen des Befestigers dreht der Befestiger leer weiter. Dann kann die Hülse am Schaft entlang in die Tülle geschoben werden, bis diese die (noch auf dem Befestiger) mitdrehende Mutter 50 erreicht. Die Hülse greift in den Kraftangriff 52 der Mutter ein und bremst sie ab bzw. hält sie fest. Durch das im Verglich zum ersten Gewindeabschnitt 15 gegensinnige Gewinde auf dem zweiten Gewindeabschnitt 17 wird bei beibehaltener Drehung des Befestigers die Mutter 50 in Richtung Unterkonstruktion tiefer in die Tülle bewegt, bis diese, wie vorbeschrieben, an der Anschlagfläche 38 der Tülle anschlägt.

Für den Bediener bedeutet dieses Vorgehen eine Zeitersparnis, weil er den Setz- und Justiervorgang in einem Arbeitsgang erledigen kann. Sobald der Befestiger seine Setztiefe erreicht hat, kann er ohne die Antriebsbewegung zu unterbrechen oder die Drehrichtung zu ändern durch Überschieben der Hülse den Justiervorgang beginnen und gezielt so steuern, dass die Tülle in der geforderten Tiefe gesetzt wird.

### BESCHREIBUNG DER FIGUREN

Die Erfindung wird nun mit Bezug auf die begleitenden Zeichnungen anhand besonders bevorzugter Ausführungsformen beispielhaft erläutert.
Figur 1 zeigt zwei Ausführungsvarianten eines Befestigers gemäss der Erfindung ohne Mutter
Figur 2 zeigt zwei Varianten einer Tülle gemäss Erfindung
Figur 3 zeigt perspektivisch und in axialer Draufsicht eine erfindungsgemässe Mutter
Figur 4 bis 5 zeigen verschiedene Phase eines Setzvorgangs einer erfindungsgemässen Befestigungsanordnung.
Figur 6 zeigt eine Befestigungsanordnung aus Befestiger und Mutter

In Figur 1 wird unter den Bezugszeichen 10 sowie 20 jeweils eine Variante eines Befestigers gezeigt. Der Unterschied liegt nicht in der Funktion, sondern nur im technischen Design in einem Punkt. Die Hauptbestandteile sind in beiden Fällen ein Kopf 11, ein anschliessender Schaft 12 und eine (Bohr-)Spitze 13. Beide Varianten tragen auf dem Schaft zwei Gewindeabschnitte 15 und 17, von denen eines als Links-, das andere als Rechtsgewinde ausgeführt ist (bzw. umgekehrt). Dazwischen ist in Figur 1 ein gewindefreier Abschnitt 16 gezeigt. Anschlag 18 ist in der linken Variante 10 als separater Wulst 22 ausgeführt ist, in der Variante 2 als Vorsprung eines Schaftabschnittes. Funktionell leisten beide, wie weiter oben beschrieben, denselben Dienst. Der gewindefreie Schaftbereich 21 dient als Haltebereich für das Tragblech der Unterkonstruktion, sobald der Befestiger seine Endposition erreicht hat.

In Figur 1 ist der Kraftangriff 19 lediglich angedeutet als Innenangriff in der flanschähnlichen Verbreiterung des Kopfes 11. Alternativ kann auch ein Aussenangriff (e.g. als Vierkant, Sechskant) realisiert werden. Bevorzugt wird eine schlanke Ausführung, um die Funktionalität wie oben beschrieben, zu gewährleisten.

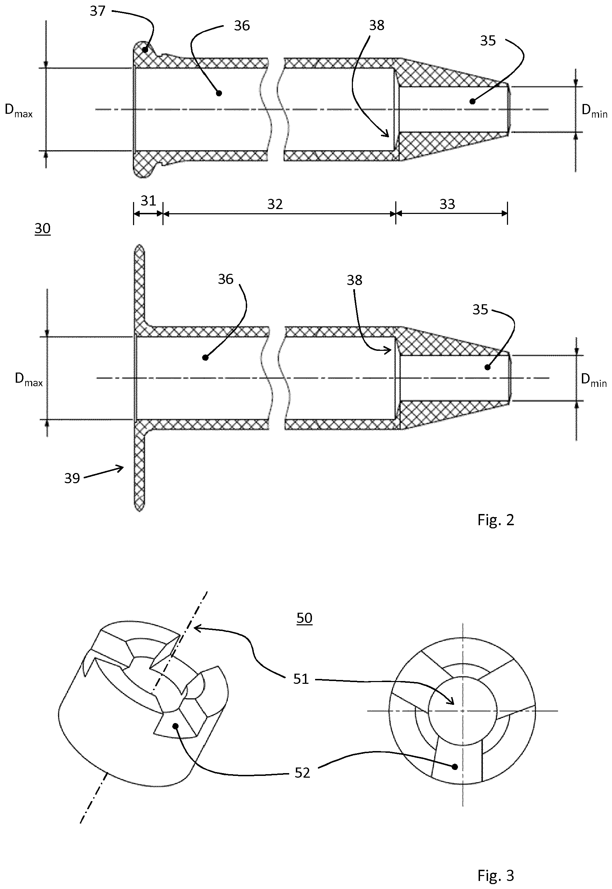

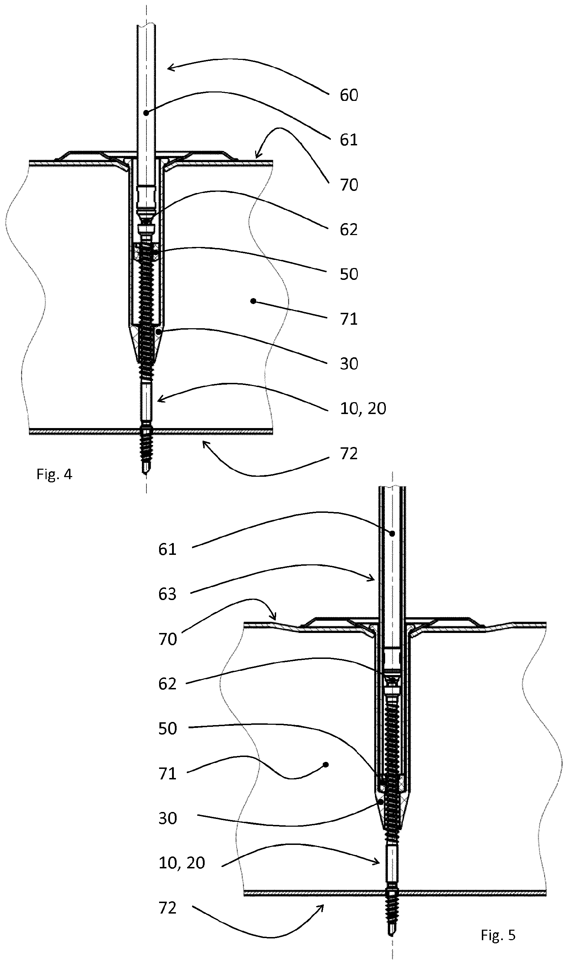

In Figur 2 ist in zwei Ausführungsvarianten eine Tülle 30 gezeigt. Sie besteht im Wesentlichen aus einem Kopf(teil) 31, einem zylindrischen bzw. hohlzylindrischen Schaft 32, an den wiederum eine sich konisch verjüngende Spitze 33 anschliesst. Der freie Innendurchmesser Dₘₐₓ von Kopfteil 31 und Schaft 32 ist koaxial um eine gemeinsame Zentralachse 41 angeordnet und ebenfalls (hohl)zylindrisch ausgelegt und so dimensioniert, dass der zylindrische Innenraum 36 ein Werkzeug 60 mit angesetztem Befestiger 10 bzw. 20 plus der oben beschriebenen Hülse 63 aufnehmen kann. Der Innenraum 36 geht über in eine zylindrische Durchgangsöffnung 35, der Übergang bildet dabei eine dem Tüllenkopf 31 zugewandte Anschlagfläche 38. Die obere Variante der Tülle 30 weist einen Flansch bzw. einen flanschähnlich geformten Kopf 37 auf. Er dient als Rand zum Halten einer aufzusteckenden bzw. aufsteckbaren Lastverteilscheibe. Figur 4 und 5 zeigen eine solche aufgesteckte Lastverteilscheibe in der Anwendung. Die Variante in Figur 2 unten ist mit einer Lastverteilscheibe 39 gezeigt, die integraler Teil der Tülle 30 ist. Diese Ausführungsform reduziert die Komplexität des Systems aus Befestiger 10, 20 mit Mutter 50, Tülle 30 und aufsteckbarer Lastverteilscheibe, hat aber den Nachteil der geringeren Flexibilität im Einsatz.

Figur 3 zeigt in Schrägansicht (links) und Draufsicht (rechts) eine Mutter 50. An ihrer im vormontierten Zustand zur Befestigerspitze 13 weisenden Ende ist ein Kraftangriff 52 angebracht, der mit dem Werkzeug 60 in der oben beschriebenen Weise zusammenwirken kann. Im vorliegenden Fall sind drei um 120° versetzte Aussparungen gezeigt, in die komplementäre Vorsprünge des Werkzeugs eingreifen können. Die Zentralachse 51 bildet dann auch die Zentralachse des Werkzeugs 60 bzw. der Hülse 63. Diese bevorzugte Ausführungsform ist nicht einschränkend, der Fachmann kann äquivalente Varianten nach seinem Fachwissen auslegen. Insbesondere können Varianten mit nur einer Aussparung, zwei Aussparungen (Versatz 180°) oder auch 4 Aussparungen (Versatz 90°) eingesetzt werden. Auch eine Stirnverzahnung ist möglich. Die Werkzeuge werden dazu komplementär ausgeführt.

Die Figuren 4 und 5 zeigen Momentaufnahmen aus dem Montageverfahren. In Figur 4 ist der Moment zu sehen, wo der Befestiger 10, 20 seine Einbautiefe erreicht hat und überdreht. Die zylindrische Stange 62 des Werkzeugs 60 steht via den Werkzeugkopf 62 mit dem Kopf des Befestigers 10, 20 im Eingriff. Die Mutter 50 befindet sich auf dem zweiten Gewindeabschnitt, ist aber noch nicht abgesenkt. Die Tülle 30 weist eine aufgesteckte Lastverteilscheibe auf. Die Isolationsschicht 71 liegt noch locker auf dem Tragblech 72 auf.

In Figur 5 ist der Moment gezeigt, wo die Montage fertiggestellt ist. Die rohrförmige Hülse ist über die zylindrische Stange 61 des Werkzeugs 60 so geschoben, dass die Hülse in den Kraftangriff der Mutter 50 eingreift. Während der Befestiger via Stange 61 weiter rotiert, bremst die Hülse 63 die Mutter 50 ab, wodurch diese beginnt in Richtung Befestigerspitze (in der Zeichnung nach unten) zu wandern. Dadurch wird die Tülle Richtung Tragblech 72 gezogen, was in der Figur 5 als leichte Verformung der Abdeckfolie 70 angedeutet ist. Unmittelbar danach kann das Werkzeug 60 samt Hülse abgezogen werden und die nächste Befestigungsanordnung gesetzt werden.

Figur 6 zeigt eine Befestigungsanordnung aus einem Befestiger 80 und einer Mutter 50. An einen Kopf 11 schliesst Schaft 12 an mit einer (Bohr-)Spitze 13. Wie schon zu Figur 1 erläutert, befinden sich auf dem Schaft zwei Gewindeabschnitte 15 und 17, von denen eines als Links-, das andere als Rechtsgewinde ausgeführt ist (bzw. umgekehrt). Dazwischen ist ein gewindefreier Abschnitt 16 angeordnet. Der Anschlag 18 als Tiefenbegrenzung ist als separater Wulst gezeigt, sei aber nur exemplarisch und nicht einschränkend gemeint. Der gewindefreie Schaftbereich 21 dient als Haltebereich für das Tragblech der Unterkonstruktion, sobald der Befestiger seine Endposition erreicht hat.

Abschnitt 82 markiert jenen Bereich, in dem die Mutter 50 vorteilhafterweise angeordnet wird. Das Gewinde ist in diesem Bereich geschwächt ausgeführt bzw. Bereich 82 wird als gewindefreier Unterkopfabschnitt hergestellt.

## Patentansprüche

1. Befestiger (80) mit einem Kopf (11), einem daran anschliessenden Schaft (12) und einer daran anschliessenden Spitze (13), wobei der Schaft (12) einen Gewindeabschnitt (17) nahe dem Kopf (11) aufweist, auf dem eine Mutter (50) angebracht ist **dadurch gekennzeichnet, dass** der Befestiger einen weiteren Gewindeabschnitt (15) nahe der Spitze (13) aufweist sowie einen dazwischen angeordneten Anschlag (18), wobei der spitzennahe Gewindeabschnitt (15) als Rechtsgewinde und der kopfnahe Gewindeabschnitt (17) als Linksgewinde ausgeführt ist bzw. technisch äquivalent der spitzennahe Gewindeabschnitt (15) als Linksgewinde und der kopfnahe Gewindeabschnitt (17) als Rechtsgewinde.

2. Befestiger (80) nach Anspruch 1, **dadurch gekennzeichnet, dass** die Mutter (50) aus Kunststoff geformt ist oder als Blechformteil oder Tiefziehteil ausgeführt wird.

3. Befestiger (80) nach Anspruch 1 und/oder 2, **dadurch gekennzeichnet, dass** der Anschlag (18) als Teil eines ringförmigen Wulstes (22) oder als Abschnitt mit vergrössertem Kerndurchmesser eines gewindefreien Abschnittes (16) ausgeführt ist oder durch den zur Spitze (13) weisenden Auslauf des kopfnahen Gewindeabschnitts (17) gebildet wird.

4. Befestiger (80) nach einem der vorhergehenden Ansprüche, **dadurch gekennzeichnet, dass** zwischen dem ersten (15) Gewindeabschnitt und dem Anschlag (18) ein gewindefreier Schaftbereich (21) angeordnet ist.

5. Befestiger (80) nach einem der vorhergehenden Ansprüche, **dadurch gekennzeichnet, dass** die Spitze (13) als Bohrspitze ausgeführt ist.

6. Befestiger (80) nach einem der vorhergehenden Ansprüche, **dadurch gekennzeichnet, dass** die Steigung des Gewindes im ersten Gewindeabschnitt (15) sich von der Steigung im zweiten Gewindeabschnitt (17) unterscheidet.

7. Befestiger (80) nach einem der vorhergehenden Ansprüche, **dadurch gekennzeichnet, dass** die Mutter (50) eine zylindrische Form um eine zentrale Rotationsachse (51) hat und an einem Längsende einen Kraftangriff (52) aufweist.

8. Befestiger (80) nach einem der vorhergehenden Ansprüche, **dadurch gekennzeichnet, dass** die Aussendurchmesser des spitzennahe Gewindeabschnitts (15) wie auch des Anschlags (18) geringer sind als der freie Gewindeinnendurchmesser der Mutter (50) sind.

9. Befestiger (80) nach einem der vorhergehenden Ansprüche, **dadurch gekennzeichnet, dass** der Gewindeabschnitt (17) mindestens in einem Bereich (82), wo die Mutter (50) angeordnet ist, geschwächt ausgeführt ist.

10. Befestiger (80) nach einem der vorhergehenden Ansprüche, **dadurch gekennzeichnet, dass** die Mutter (50) bzw. der Bereich (82) am kopfnahen Gewindeauslauf des Gewindeabschnitts (17) angeordnet ist.

11. Befestiger (80) nach einem der vorhergehenden Ansprüche, **dadurch gekennzeichnet, dass** der Bereich (82) als gewindefreier Abschnitt ausgeführt ist.

12. Befestigungsanordnung umfassend
- eine Tülle (30), die als im wesentlichen zylindrische Hülse mit einem Kopfteil (31), einem hohlzylindrischem Schaft (32) und einer konischen Spitze (33) ausgeführt ist,
- einen Befestiger (80) nach Anspruch 1 bis 11

13. Befestigungsanordnung nach Anspruch 12, **dadurch gekennzeichnet, dass** die konische Spitze (33) der Tülle (30) über eine Durchtrittsöffnung (35) verfügt, deren Durchmesser geringer ist als der Innendurchmesser des zylindrischen Innenraums (36) des Schaftes (32) und dass der zylindrische Innenraum (36) und die Durchgangsöffnung (35) eine gemeinsame Zentralachse (41) haben.

14. Befestigungsanordnung nach Anspruch 12 und/oder 13, **dadurch gekennzeichnet, dass** der Übergangsbereich zwischen der zylindrischen Durchgangsöffnung (35) und dem zylindrischen Innenraum (35) eine im wesentlichen radialsymmetrische, ebene oder leicht konische Anschlagfläche (38) bildet.

15. Befestigungsanordnung nach Anspruch 12bis 14, **dadurch gekennzeichnet, dass** der Kopf (31) der Tülle (30)
- entweder eine flanschähnliche Form (37) aufweist, dazu ausgelegt, um für eine Lastverteilscheibe (39) eine Haltefläche zu bilden
- oder dass der Kopf eine angeformte radiale Kopfverbreiterung aufweist

16. Befestigungsanordnung nach Anspruch 12 bis 15, **dadurch gekennzeichnet, dass** die Mutter (50), wenn aus Kunststoff geformt, bei der Herstellung direkt auf einen Abschnitt (82) des kopfnahen Gewindeabschnittes (17). aufgespritzt ist.

17. Befestigungsanordnung nach Anspruch 12 bis 15, **dadurch gekennzeichnet, dass** die Mutter (50) auf einen Abschnitt (82) des kopfnahen Gewindeabschnittes (17) aufgeschoben oder aufgeschraubt ist.

18. Verfahren zur Montage einer Befestigungsanordnung, mit folgenden Schritten:
- Bereitstellen einer Befestigungsanordnung nach Anspruch 12 bis 16 bzw. 12 bis 15 und 17, wobei der Befestiger (80) mit der Mutter (50) in den Innenraum (36) der Tülle (30) eingeführt ist
- Eindrücken bzw. Eindrehen der Befestigungsanordnung in eine Gebäudehülle aus zumindest Abdeckfolie (70), Isolationsschicht (71) und Tragblech (72) (in Arbeitsrichtung betrachtet),
- Durchbohren des Tragbleches (72) mit Hilfe der Bohrspitze bis das Tragblech (72) am Anschlag (18) anschlägt und der Befestiger (10, 20) überdreht
- Sichern der Mutter (50) mittels eines Werkzeuges gegen die Drehbewegung des Befestigers, wodurch die Mutter (50) sich auf dem zweiten Gewindeabschnitt (17) des Befestigers (10) in Richtung Spitze (13) bewegt
- Anschlagen der Mutter (50) an der Anschlagfläche (38) der Tülle (30) und dadurch Mitnahme der Tülle durch die Mutter (50) während der weiteren Drehbewegung des Befestigers (10)
- Beenden der Drehbewegung bei Erreichen der Setztiefe der Tülle (30)

19. Verfahren nach Anspruch 18, **dadurch gekennzeichnet, dass** während des gesamten Setzvorgangs der Befestigungsanordnung die Antriebsrichtung des Befestigers (80) beibehalten wird.

## Claims

1. A fastener (80), comprising a head (11), a shaft (12) connected thereto, and a tip (13) connected to said shaft, the shaft (12) having a thread section (17) close to the head (11), on which thread section a nut (50) is fitted, **characterized in that** the fastener has a further thread section (15) close to the tip (13) and a stop (18) arranged therebetween, wherein the thread section (15) closed to the tip is formed as a right-hand thread and the thread section (17) close to the head as a left-hand thread, or technically equivalent, the thread section (15) close to the tip is formed as a left-hand thread and the thread section (17) close to the head as a right-hand thread.

2. The fastener (80) according to claim 1, **characterized in that** the nut (50) is molded from plastics or is formed as a sheet-metal molded part or deep-drawn part.

3. The fastener (80) according to claim 1 and/or 2, **characterized in that** the stop (18) is formed as part of a ring-shaped bead (22) or as a section with an enlarged core diameter of a thread-free section (16) or is formed by the runout of the thread section (17) close to the head facing the tip (13).

4. The fastener (80) according to any one of the preceding claims, **characterized in that** a thread-free shaft section (21) is arranged between the first (15) thread section and the stop (18).

5. The fastener (80) according to any one of the preceding claims, **characterized in that** the tip (13) is formed as a drill tip.

6. The fastener (80) according to any one of the preceding claims, **characterized in that** the pitch of the thread in the first thread section (15) is different from the pitch in the second thread section (17).

7. The fastener (80) according to any one of the preceding claims, **characterized in that** the nut (50) has a cylindrical shape about a central axis of rotation (51) and, at one longitudinal end, has a force engagement means (52).

8. The fastener (80) according to any one of the preceding claims, **characterized in that** the outer diameters of the thread section (15) close to the tip as well as of the stop (18) are smaller than the free inner thread diameter of the nut (50).

9. The fastener (80) according to any one of the preceding claims, **characterized in that** the thread section (17) is formed to be weakened at least in a region (82) where the nut (50) is arranged.

10. The fastener (80) according to any one of the preceding claims, **characterized in that** the nut (50) or the region (82) is arranged close to the runout of the thread close to the head of the thread section (17).

11. The fastener (80) according to any one of the preceding claims, **characterized in that** the region (82) is formed as a thread-free section.

12. A fastening arrangement, comprising
- a grommet (30) formed as a substantially cylindrical sleeve having a head part (31), a hollow cylindrical shaft (32) and a conical tip (33),
- a fastener (80) according to claims 1 to 11.

13. The fastening arrangement according to claim 12, **characterized in that** the conical tip (33) of the grommet (30) has a passage opening (35) having a diameter that is smaller than the inner diameter of the cylindrical inner space (36) of the shaft (32), and **in that** the cylindrical inner space (36) and the passage opening (35) have a common central axis (41).

14. The fastening arrangement according to claim 12 and/or 13, **characterized in that** the transition region between the cylindrical passage opening (35) and the cylindrical inner space (36) forms a substantially radially symmetrical, planar or slightly conical stop surface (38).

15. The fastening arrangement according to claims 12 to 14, **characterized in that** the head (31) of the grommet (30)
- either has a flange-shaped form (37) designed to form a holding surface for a load distribution disk (39),
- or has an integral radial head widening.

16. The fastening arrangement according to claims 12 to 15, **characterized in that** the nut (50), if molded from plastics, is injection-molded directly onto a section (82) of a thread section (17) close to the head during manufacture.

17. The fastening arrangement according to claims 12 to 15, **characterized in that** during manufacture, the nut (50) is slid or screwed onto a section (82) of the thread section (17) close to the head.

18. A method for mounting a fastening arrangement, comprising the following steps:
- providing a fastening arrangement according to claims 12 to 16 or 12 to 15 and 17, wherein the fastener (80) with the nut (50) is introduced into the inner space (36) of the grommet (30),
- pushing or screwing the fastening arrangement into a building envelope comprising at least a cover foil (70), an insulation layer (71) and a support sheet (72) (viewed in working direction),
- drilling through the support sheet (72) with the aid of the drill tip until the support sheet (72) abuts against the stop (18) and the fastener (10, 20) overwinds,
- securing the nut (50) by means of a tool against the rotational movement of the fastener, as a result of which the nut (50) moves on the second thread section (17) of the fastener (10) towards the tip (13),
- abutting the nut (50) against the stop surface (38) of the grommet (30) and thereby driving the grommet by means of the nut (50) during the further rotational movement of the fastener (10),
- ending the rotational movement upon reaching the placing depth of the grommet (30).

19. The method according to claim 18, **characterized in that** the driving direction of the fastener (80) is maintained throughout the entire placement process of the fastening arrangement.

## Revendications

1. Elément de fixation (80) avec une tête (11), une tige s'y raccordant (12) et une pointe (13) s'y raccordant, sachant que la tige (12) comporte une section filetée (17) proche de la tête (11) sur laquelle est placé un écrou (50), **caractérisé en ce que** l'élément de fixation comporte une autre section filetée (15) proche de la pointe (13) ainsi qu'une butée (18) disposée entre celles-ci, sachant que la section filetée proche de la pointe (15) est exécutée comme un filetage à droite et la section filetée proche de la tête (17) comme un filetage à gauche, ou de façon équivalente du point de vue technique, la section filetée proche de la pointe (15) comme un filetage à gauche et la section filetée proche de la tête (17) comme un filetage à droite.

2. Elément de fixation (80) selon la revendication 1, **caractérisé en ce que** l'écrou (50) est moulé en matière plastique ou est exécuté en tant que pièce formée en tôle ou pièce d'emboutissage profond.

3. Elément de fixation (80) selon la revendication 1 et/ou 2, **caractérisé en ce que** la butée (18) est exécutée en tant que partie d'un bourrelet annulaire (22) ou en tant que section avec un diamètre de noyau agrandi d'une section sans filetage (16) ou est formée par la fin de filet tournée vers la pointe (13) de la section filetée proche de la tête (17).

4. Elément de fixation (80) selon l'une quelconque des revendications précédentes, **caractérisé en ce qu'**une zone de tige non filetée (21) est disposée entre la première section filetée (15) et la butée (18).

5. Elément de fixation (80) selon l'une quelconque des revendications précédentes, **caractérisé en ce que** la pointe (13) est exécutée en tant que pointe de perçage.

6. Elément de fixation (80) selon l'une quelconque des revendications précédentes, **caractérisé en ce que** le pas du filetage dans la première section filetée (15) se différencie du pas dans la deuxième section filetée (17) .

7. Elément de fixation (80) selon l'une quelconque des revendications précédentes, **caractérisé en ce que** l'écrou (50) a une forme cylindrique et un axe de rotation central (51) et comporte une prise de force (52) à une extrémité longitudinale.

8. Elément de fixation (80) selon l'une quelconque des revendications précédentes, **caractérisé en ce que** le diamètre extérieur de la section filetée proche de la pointe (15) tout comme également celui de la butée (18) sont plus faibles que le diamètre intérieur de filetage libre de l'écrou (50).

9. Elément de fixation (80) selon l'une quelconque des revendications précédentes, **caractérisé en ce que** la section filetée (17) est exécutée affaiblie au moins dans une zone (82) où est disposé l'écrou (50).

10. Elément de fixation (80) selon l'une quelconque des revendications précédentes, **caractérisé en ce que** l'écrou (50) ou la zone (82) est disposé sur la fin de filetage proche de la tête de la section filetée (17).

11. Elément de fixation (80) selon l'une quelconque des revendications précédentes, **caractérisé en ce que** la zone (82) est exécutée comme section non filetée.

12. Système de fixation comprenant
- une douille (30), qui est exécutée comme un manchon pour l'essentiel cylindrique avec une partie de tête (31), une tige cylindrique creuse (32) et une pointe conique (33),
- un élément de fixation (80) selon les revendications 1 à 11.

13. Système de fixation selon la revendication 12, **caractérisé en ce que** la pointe conique (33) de la douille (30) dispose d'une ouverture de passage (35) dont le diamètre est plus faible que le diamètre intérieur de l'espace intérieur cylindrique (36) de la tige (32) et **en ce que** l'espace intérieur cylindrique (36) et l'ouverture de passage (35) possèdent un axe central commun (41).

14. Système de fixation selon la revendication 12 et/ou 13, **caractérisé en ce que** la zone de transition entre l'ouverture de passage cylindrique (35) et l'espace intérieur cylindrique (35) forme une surface de butée pour l'essentiel symétrique radialement, plane ou légèrement conique (38).

15. Système de fixation selon la revendication 12 à 14, **caractérisé en ce que** la tête (31) de la douille (30)
- soit comporte une forme analogue à une bride (37), conçue pour former une surface de maintien pour une rondelle de répartition de charge (39)
- soit que la tête comporte un élargissement de tête radial conformé.

16. Système de fixation selon la revendication 12 à 15, **caractérisé en ce que** l'écrou (50), s'il est moulé en matière plastique, est injecté lors de la fabrication directement sur une section (82) de la section filetée proche de la tête (17).

17. Système de fixation selon la revendication 12 à 15, **caractérisé en ce que** l'écrou (50) est enfilé ou vissé sur une section (82) de la section filetée proche de la tête (17).

18. Procédé de montage d'un système de fixation avec les étapes suivantes :
- préparation d'un système de fixation selon les revendications 12 à 16 ou 12 à 15 et 17, sachant que l'élément de fixation (80) avec l'écrou (50) est introduit dans l'espace intérieur (36) de la douille (30),
- enfoncement ou vissage du système de fixation dans une enveloppe de bâtiment composée au moins d'une feuille de couverture (70), d'une couche d'isolation (71) et d'une tôle porteuse (72) (vue dans le sens du travail),
- perçage de la tôle porteuse (72) à l'aide d'une pointe de perçage jusqu'à ce que la tôle porteuse (72) vienne heurter sur la butée (18) et l'élément de fixation (10, 20) passe en force,
- sécurisation de l'écrou (50) au moyen d'un outil contre le mouvement de rotation de l'élément de fixation, l'écrou (50) se déplaçant de ce fait sur la deuxième section filetée (17) de l'élément de fixation (10) en direction de la pointe (13),
- mise en butée de l'écrou (50) sur la surface de butée (38) de la douille (30) et entraînement de ce fait de la douille par l'écrou (50) pendant l'autre mouvement de rotation de l'élément de fixation (10),
- finalisation du mouvement de rotation en atteignant la profondeur de pose de la douille (30) .

19. Procédé selon la revendication 18, **caractérisé en ce que** pendant toute l'opération de pose du système de fixation, le sens d'entraînement de l'élément de fixation (80) est conservé.
